(19) Europäisches Patentamt
European Patent Office
Office européen des brevets

(11) **EP 4 708 413 A1**

(12) **EUROPEAN PATENT APPLICATION**
published in accordance with Art. 153(4) EPC

(43) Date of publication:
**11.03.2026 Bulletin 2026/11**

(21) Application number: **24800226.3**

(22) Date of filing: **02.05.2024**

(51) International Patent Classification (IPC):
*H01M 8/0612* $^{(2016.01)}$   *H01M 8/04089* $^{(2016.01)}$
*H01M 8/04014* $^{(2016.01)}$   *H01M 8/0662* $^{(2016.01)}$
*H01M 8/04701* $^{(2016.01)}$   *H01M 8/04746* $^{(2016.01)}$
*H01M 8/2475* $^{(2016.01)}$   *H01M 8/12* $^{(2016.01)}$

(52) Cooperative Patent Classification (CPC):
Y02E 60/50

(86) International application number:
**PCT/KR2024/005920**

(87) International publication number:
**WO 2024/228545 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.05.2023   KR 20230056866
06.07.2023   KR 20230087914**

(71) Applicant: **P&P Energytech Co.
Daejeon 34323 (KR)**

(72) Inventor: **LEE, Yong Hyun
Daejeon 34010 (KR)**

(74) Representative: **Viering, Jentschura & Partner
mbB
Patent- und Rechtsanwälte
Am Brauhaus 8
01099 Dresden (DE)**

(54) **SOLID OXIDE FUEL CELL SYSTEM COMPRISING CATALYTIC COMBUSTOR STRUCTURED AS HEAT EXCHANGER**

(57)    The present invention relates to a solid oxide fuel cell system comprising a catalytic combustor structured as a heat exchanger, and the present invention can maximize heat transfer efficiency by utilizing, as heat sources, all heat originating from a gas flow of a cathode and an anode of a stack, by comprising a multi-functional catalytic combustor structured as a heat exchanger, which utilizes, as heat sources, a stack cathode off-gas discharged from the stack of a fuel cell, and a fuel off-gas of a second exhaust line that diverges after passing through a heat exchanger, in order to increase the temperature of air supplied from an air supply part and supply same to a multi-functional steam reformer.

FIG. 2

EP 4 708 413 A1

## Description

### Technical Field

The present disclosure relates to a solid oxide fuel cell system including a catalytic combustor structured as a heat exchanger. More particularly, the present disclosure relates to a solid oxide fuel cell system including a catalytic combustor structured as a heat exchanger so as to utilize, as heat sources, all heat originating from gas flows of a cathode and an anode of a stack and to maximize heat transfer efficiency.

### Background Art

A fuel cell is a generator that produces water and electricity through an electrochemical reaction between hydrogen (fuel) and oxygen. A fuel cell is divided into a cathode, an anode, and an electrolyte. The type and operating temperature of fuel cells differ according to the electrolyte material. In a solid oxide fuel cell (hereinafter referred to as "SOFC"), oxygen at the cathode moves to the anode through the solid electrolyte in the form of ions. Such fuel cells typically operate at temperatures ranging from 550°C to 900°C.

In SOFCs, while different types of gases must be supplied to both electrodes (cathode and anode) of each cell, these roles are performed by separators and manifolds. The electricity generated is collected through current collectors, allowing current to flow.

An SOFC system is a device designed to supply fuel and air smoothly to an SOFC stack and to maintain a temperature ranging from approximately 550°C to 900°C, thereby enabling each cell to perform an electrochemical reaction. Therefore, typical mechanical components constituting such an SOFC system, which may vary by device, include a heat exchanger, a combustor, a reformer, a steam generator, and an air blower.

High-temperature fuel cells, including SOFCs, require efficient utilization of the heat generated from electrochemical reactions within the stack and of unreacted fuel to improve system efficiency.

In this respect, technology related to a fuel cell system has been disclosed in the art, such as Korean Patent No. 10-2490704. The above technology in the art reduces the number and shortens the length of conduits required to fluidly connect components of a fuel cell system, thereby reducing heat loss from fuel and air flowing through the conduits in the fuel cell system, and has a configuration in which the cost and complexity of the fuel cell system are relatively low.

However, in the above technology in the art, the fuel flow cycle and the air flow cycle are configured separately at the upper and lower portions of the stack, so the system is not optimized for thermal efficiency. Furthermore, when it comes to the air heat exchanger, both high-temperature and low-temperature air heat exchangers are required, resulting in an increased number of components and difficulties in achieving thermal harmony among these components, which is disadvantageous.

### Disclosure

### Technical Problem

The present disclosure, which has been devised to address the aforementioned issues, aims to provide an SOFC system including a catalytic combustor structured as a heat exchanger so as to utilize, as heat sources, all heat originating from gas flows of a cathode and an anode of a fuel cell stack and to maximize heat transfer efficiency.

The present disclosure also aims to provide an SOFC system in which a stack and a balance of plant (BOP) are installed in a modular form within a hot box, enabling stack-customized design, integrated BOP module design for optimized thermal management, and stack replacement during maintenance.

The present disclosure also aims to provide an SOFC system having a simple structure because high-temperature steam generated by a fuel cell (FC) reaction is continuously supplied to a fuel flow and serves not only as a reactant ($H_2O$) for a reforming reaction in a reformer but also as energy (heat or temperature), thereby eliminating the need for a separate steam generator required for fuel reforming, as well as a feed-water pipe configured to supply water necessary for natural gas (NG) reforming, and enabling thermal harmony among mechanical devices exposed to high-temperature regions, such as a heat exchanger, a reformer, a combustor, and a stack, shortest-distance arrangement, integration, and the like, thereby reducing the amount of fuel supplied to the system through fuel recirculation without lowering the temperature.

### Technical Solution

In order to achieve the aforementioned objectives of the present disclosure, the present disclosure provides a fuel recirculation-type SOFC system including: a fuel cell stack; a fuel supply part configured to supply fuel to the fuel cell stack;

an air supply part configured to supply air to the fuel cell stack; a heat exchanger configured to supply the fuel supplied from the fuel supply part to a multi-functional steam methane reformer by increasing a temperature of the fuel through a stack anode off-gas discharged from the fuel cell stack; a multi-functional catalytic combustor structured as a heat exchanger, the multi-functional catalytic combustor configured to increase a temperature of the air supplied from the air supply part and supply the air to the multi-functional steam methane reformer by utilizing, as heat sources, a stack cathode off-gas discharged from the fuel cell stack and a fuel off-gas of a second exhaust line branching off after passing through the heat exchanger; the multi-functional steam methane reformer configured to receive heat required for a reforming reaction from a large amount of air, the temperature of which has been increased by a combustion reaction in the multi-functional catalytic combustor, and reform the fuel supplied from the heat exchanger into hydrogen, thereby supplying the resulting hydrogen to the fuel cell stack; and a recycle blower installed in a fuel line to continuously recirculate the stack anode off-gas discharged from the fuel cell stack.

The multi-functional catalytic combustor is characterized by including: a plurality of plates stacked such that a first flow space through which a low-temperature fluid flows and a second flow space through which a high-temperature fluid flows are alternately formed; a flow path formed on the plates for efficient heat transfer; a first inlet and a first outlet configured to allow the low-temperature fluid to flow into and out of the first flow space; a second inlet and a second outlet configured to allow the high-temperature fluid to flow into and out of the second flow space; and a combustion catalyst packed in the second flow space, through which the high-temperature fluid flows, to promote the combustion reaction, whereby heat exchange is performed by allowing the high-temperature fluid and the low-temperature fluid to flow alternately between the plates.

In this case, the low-temperature fluid is fresh air supplied from the air supply part, and the high-temperature fluid includes the stack cathode off-gas discharged from the fuel cell stack, and the fuel off-gas of the second exhaust line branching off after passing through the heat exchanger.

In the present disclosure, the low-temperature fluid and the high-temperature fluid may flow in any one of co-flow, counter-flow, and cross-flow configurations.

In addition, a curved structure may be placed in the first flow space or the second flow space to increase a heat transfer area.

The present disclosure is characterized in that the stack anode off-gas is primarily connected to the heat exchanger and branches into two exhaust lines, whereby a first exhaust line is provided to a fuel inlet line to supply the stack anode off-gas together with the fuel supplied from the fuel supply part to the stack for fuel recirculation, thereby improving power generation efficiency, and the second exhaust line is provided to the multi-functional catalytic combustor to maintain a system temperature.

In the meantime, a flow rate of the fuel supplied from the fuel supply part may be regulated to adjust an external/internal reforming ratio of the fuel cell stack, thereby controlling a stack temperature.

In the present disclosure, the fuel cell stack, the heat exchanger, the multi-functional catalytic combustor, the multi-functional steam methane reformer, and the recycle blower are installed within a hot box, such that the solid oxide fuel cell system has a structure in which the fuel off-gas continuously circulates within the hot box, thereby maximizing thermal efficiency.

A fuel recirculation flow in the fuel line is formed in the following order: the fuel cell stack →- the heat exchanger → the recycle blower → the heat exchanger → the multi-functional steam methane reformer → the stack. In addition, a flow directed toward the multi-functional catalytic combustor in the fuel line is formed in the following order: the fuel cell stack → the heat exchanger → the recycle blower → the multi-functional catalytic combustor → vent.

In the meantime, separate city gas (NG) may be directly supplied to a fuel inlet pipe between the multi-functional steam methane reformer and the stack for additional stack temperature control, thereby forcibly performing internal stack reforming to control a stack temperature.

Furthermore, in the present disclosure, the fuel cell stack and BOP are installed in a modular form, and each module is connected through piping, such that stack replacement is enabled by separating each module during maintenance.

**Advantageous Effects**

According to the present disclosure discussed above, an FC system of the present disclosure has the following effects.

① Thermal efficiency maximization

The FC system of the present disclosure can maximize thermal efficiency by recovering heat (from off-gas) generated inside a hot box.

Specifically, the FC system exhibits high thermal efficiency because the exothermic part (FC reaction) and the endothermic part (NG reforming) are connected in a single flow. Furthermore, a multi-functional catalytic combustor has a structure allowing heat exchange, thereby maximizing thermal efficiency.

② Smooth fuel recycling

The FC system of the present disclosure has the effect of helping smooth fuel recycling by positioning a recycle blower inside the hot box.

③ Simple stack replacement

The FC system of the present disclosure has the effect of simplifying stack replacement because the stack and BOP components are connected through piping.

④ Stack performance degradation prevention

The FC system of the present disclosure can prevent performance degradation caused by temperature differences around the stack in advance and reduce the fuel utilization rate in the stack resulting from fuel recirculation, by utilizing, as heat sources, heat originating from gas flows of a cathode and an anode of the stack in a multi-functional catalytic combustor, without separating the flows of fuel and air.

**Description of Drawings**

FIG. 1 is a schematic diagram illustrating the configuration of an SOFC system according to the present disclosure.
FIG. 2 is a configuration diagram illustrating the overall flows of fuel and air in an SOFC system according to the present disclosure.
FIG. 3 is an internal exploded perspective view for showing a heat exchange method in a catalytic combustor structured as a heat exchanger according to the present disclosure.
FIG. 4 is a cross-sectional diagram schematically illustrating a combustion reaction occurring in a catalytic combustor structured as a heat exchanger according to the present disclosure.
FIG. 5 is a conceptual diagram illustrating three flow configurations of a high-temperature fluid and a low-temperature fluid in a catalytic combustor according to the present disclosure.
FIG. 6 is a perspective view illustrating embodiments of three flow configurations of a high-temperature fluid and a low-temperature fluid in a catalytic combustor according to the present disclosure.
FIG. 7 is a perspective view illustrating embodiments of a catalytic combustor according to the present disclosure.
FIG. 8 is a configuration diagram illustrating the temperatures of fuel and air when passing through each component in an SOFC system according to the present disclosure.

**Mode for Invention**

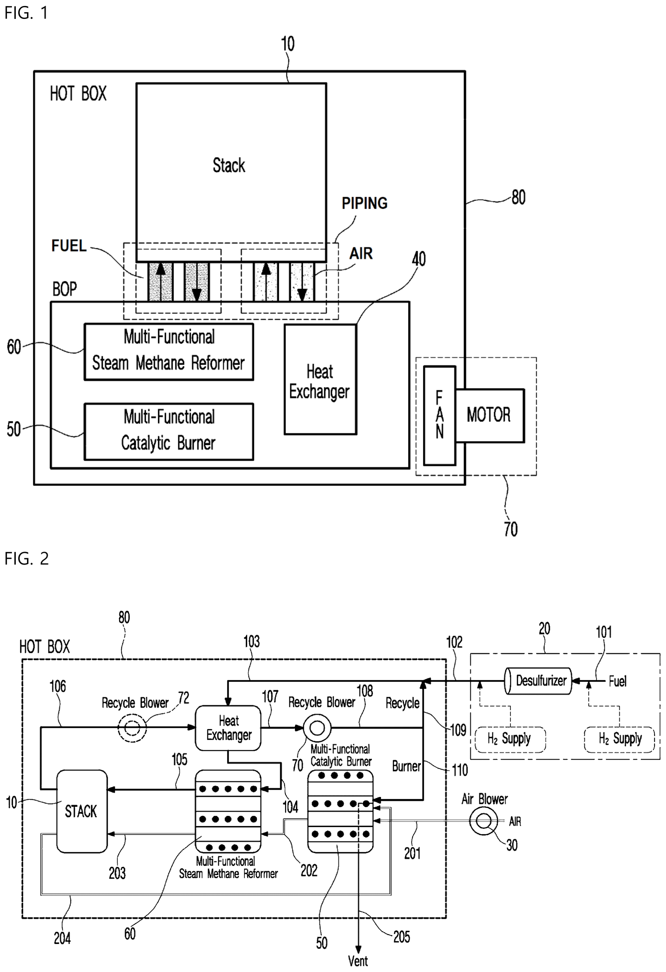

FIG. 1 is a schematic diagram illustrating the configuration of an SOFC system according to the present disclosure, and FIG. 2 is a configuration diagram illustrating the overall flows of fuel and air in the SOFC system according to the present disclosure.
The present disclosure relates to a fuel recirculation-type SOFC system capable of maximizing thermal efficiency by recirculating fuel, which is configured by including: a fuel cell stack 10; a fuel supply part 20 configured to supply fuel to the fuel cell stack 10; an air supply part 30 configured to supply air to the fuel cell stack 10; a heat exchanger 40 configured to increase the temperature of fresh fuel supplied by utilizing the heat of a stack anode off-gas discharged from the fuel cell stack 10; a multi-functional catalytic combustor 50 utilizing, as heat sources, a stack cathode off-gas discharged from the fuel cell stack 10 and a fuel off-gas after passing through the heat exchanger; a multi-functional steam methane reformer 60 configured to reform the fuel, the temperature of which has been increased in the heat exchanger 40, into hydrogen, thereby supplying the resulting hydrogen to the fuel cell stack 10; and a recycle blower 70 installed in the fuel line to continuously recirculate the stack anode off-gas discharged from the fuel cell stack 10.
The fuel cell stack 10, a structure in which a plurality of cells are stacked, is configured to increase power output by connecting each cell in series, and typically includes repeatedly used components such as cells, separators, current collectors, and sealing materials, a manifold configured to smoothly supply gases to the anode and the cathode, stack fastening components in various shapes, and a bus bar capable of electrical connection.
The FC system of the present disclosure is characterized in that the fuel cell stack 10 and BOP are installed in a modular form, enabling stack-customized design, as well as integrated BOP module design for optimized thermal management.

In other words, in the present disclosure, the fuel cell stack 10, the heat exchanger 40, the multi-functional catalytic combustor 50, the multi-functional steam methane reformer 60, and the recycle blower 70 are installed within a hot box 80. As shown in FIG. 1, the fuel cell stack 10 and the BOP are installed in a modular form and thus configured to enable replacement of the stack 10 when necessary by separating each module during maintenance.

The BOP module, except for the power generation device, refers to a part related to auxiliary components and subsystems required for power generation, such as components for energy transfer, and includes the heat exchanger 40, the multi-functional catalytic combustor 50, the multi-functional steam methane reformer 60, the recycle blower 70, and the like in the present disclosure.

In the present disclosure, the fuel and air flow between the stack 10 and the BOP components only through piping, thereby simplifying stack replacement and enabling stack-customized design.

The FC system of the present disclosure has a structure in which the fuel cell stack 10 and the BOP are installed within the hot box 80, and the fuel off-gas continuously circulates within the hot box 80, thereby maximizing thermal efficiency.

In the meantime, in the present disclosure, hydrogen is supplied through the fuel supply part 20 to increase the system temperature to a level at which SOFC operation is possible. Furthermore, because city gas is not externally reformed by a method such as catalytic partial oxidation (CPOx) without a separate water supply device, hydrogen can serve as the fuel during the warm-up step for initial operation. In the meantime, when using CPOx, NG operation becomes possible.

Therefore, the fuel supply part 20 includes a hydrogen supply part configured to supply hydrogen, and a desulfurizer configured to remove sulfur from the fuel. The hydrogen supply part may be implemented in any form containing hydrogen, for example, a hydrogen tank, hydrogen piping, a hydrogen storage alloy system, a water electrolysis system, a hydrogen utility, a multi-functional steam methane reformer for hydrogen, or a hydrogen supply device.

The fuel supplied from the fuel supply part 20 flows into the hot box 80 through a fuel inlet line 102, and a fuel line for the flow of the fuel, including the fuel inlet line 102, is installed to connect each device.

In addition, the air supply part 30 may be composed of an air blower capable of supplying air into the hot box 80, and an air line for the flow of air is installed to connect each device.

The present disclosure is characterized in that the fuel line and the air line are configured such that the stack cathode off-gas and the stack anode off-gas discharged from the fuel cell stack 10 serve as heat sources of the fuel and air supplied from the fuel supply part 20 and the air supply part 30, respectively.

For a detailed description of the fuel flow in the present disclosure, the fuel is supplied to the system through the desulfurizer outside the hot box 80, enters the multi-functional steam methane reformer 60 through the heat exchanger 40, and is then supplied to the stack 10.

In this case, while the fuel supplied from the fuel supply part 20 flows into the heat exchanger 40 through the fuel inlet line 102, the heat exchanger 40 is connected to a fuel line 106 that allows the stack anode off-gas to be introduced to increase the temperature of the fresh fuel supplied from the fuel supply part 20 by utilizing the heat of the stack anode off-gas discharged from the fuel cell stack 10.

In the present disclosure, for the stack anode off-gas discharged from the stack 10 to increase the temperature of the fresh fuel supplied in the heat exchanger 40 and then continuously recirculate, a fuel line 107 for fuel recirculation is connected to the heat exchanger 40, and the recycle blower 70 is installed in the fuel line 107.

The present disclosure is characterized in that the fuel off-gas suctioned by the recycle blower 70 branches into the fuel inlet line 102 and the multi-functional catalytic combustor 50, thereby providing recirculated fuel.

In other words, the fuel off-gas passing through the recycle blower 70 branches into two lines 109 and 110. A first branch line 109 is connected to the fuel inlet line 102 so that the fuel off-gas is mixed with the fresh fuel supplied from the fuel supply part 20 and re-supplied to the stack 10 through the heat exchanger 40, and a second branch line 110 is connected to the multi-functional catalytic combustor 50 to allow the fuel off-gas to flow.

The fuel off-gas introduced into the fuel inlet line 102 through the first branch line 109 flows back into the heat exchanger 40, while the fuel off-gas introduced into the multi-functional catalytic combustor 50 through the second branch line 110 increases the temperature of a large amount of air supplied from the air supply part and is then discharged.

In the present disclosure, a fuel recirculation flow in the fuel line is formed in the following order: the fuel cell stack 10 → the heat exchanger 40 → the recycle blower 70 → the heat exchanger 40 → the multi-functional steam methane reformer 60 → the stack '10.

In addition, a flow directed toward the multi-functional catalytic combustor 50 in the fuel line may be formed in the following order: the fuel cell stack 10 → the heat exchanger 40 → the recycle blower 70 → the multi-functional catalytic combustor 50 → vent.

As described above, the fuel, the temperature of which has been increased in the heat exchanger 40, exchanges heat with the fresh fuel introduced, thereby increasing the temperature of the fresh fuel, and is then provided to the multi-functional steam methane reformer 60 that utilizes the heat of high-temperature air. The fuel reformed through the multi-functional steam methane reformer 60 is supplied to the fuel cell stack 10.

In addition, the heat generated by the FC reaction in the fuel cell stack 10 may be mixed with the fuel supplied from the fuel supply part and reformed in the multi-functional steam methane reformer. Furthermore, the flow rate of the fuel supplied from the fuel supply part 20 can be regulated to adjust the external/internal reforming ratio of the fuel cell stack 10, thereby controlling the stack temperature.

In the present disclosure, separate city gas (NG) may be directly supplied to a fuel inlet line 105 between the multi-functional steam methane reformer 60 and the stack 10 for additional stack temperature control, thereby forcibly performing internal stack reforming to control the stack temperature.

In the meantime, for a detailed description of the air flow in the FC system of the present disclosure, air is supplied from the air supply part 30 and flows into the multi-functional catalytic combustor 50.

In the multi-functional catalytic combustor 50, while the fuel off-gas is introduced through the second branch line 110, the high-temperature stack cathode off-gas discharged from the stack is introduced at the same time, and the temperature of the fresh air supplied is increased by utilizing the heat of the stack cathode off-gas.

The multi-functional catalytic combustor 50 of the present disclosure utilizes the combustion reactions of the fuel off-gas and the stack cathode off-gas as heat transfer sources to increase the temperature of the air supplied.

Thereafter, the air, the temperature of which has been increased through the multi-functional catalytic combustor 50, is provided to the multi-functional steam methane reformer 60 that utilizes the heat of the high-temperature air.

The heat generated by the combustion reaction in the multi-functional catalytic combustor 50 increases the temperature of the large amount of fresh air supplied from the air supply part 30. Then, the heated air is supplied to the multi-functional steam methane reformer 60 and utilized as the heat required for the reforming reaction to achieve thermal equilibrium.

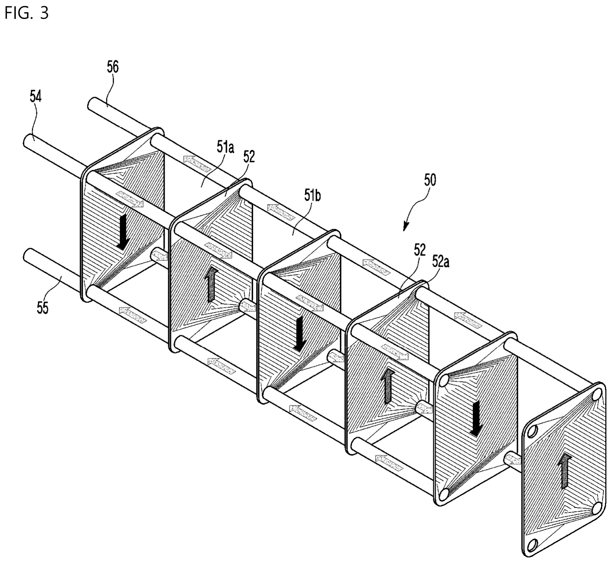

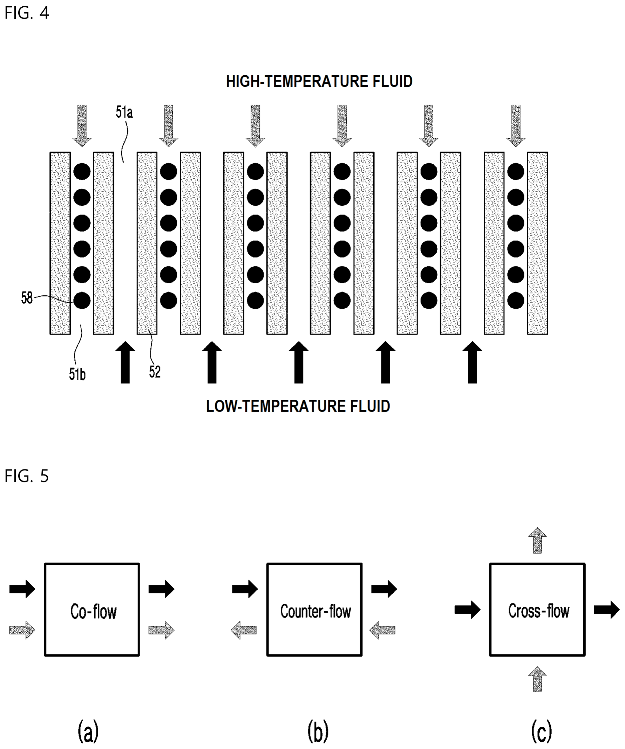

FIG. 3 is an internal exploded perspective view for showing a heat exchange method in the catalytic combustor structured as a heat exchanger according to the present disclosure, and FIG. 4 is a cross-sectional diagram schematically illustrating the combustion reaction occurring in the catalytic combustor structured as a heat exchanger according to the present disclosure.

The multi-functional catalytic combustor 50 enables the fresh air supplied from the air supply part 30, serving as a low-temperature fluid, and the stack cathode off-gas discharged from the fuel cell stack 10 and the fuel off-gas of a second exhaust line 110 branching off after passing through the heat exchanger, serving as a high-temperature fluid, to exchange heat with each other.

In other words, the multi-functional catalytic combustor 50 of the present disclosure introduces both the stack cathode off-gas and the fuel off-gas, combusts most of the hydrogen, carbon monoxide, methane, and the like, and discharges the resulting gas to the outside. In this case, these heat sources may be utilized to heat the external air required for the electrochemical reaction of the stack.

The multi-functional catalytic combustor 50 is configured by including: a plurality of plates 52 stacked such that a first flow space 51A through which the low-temperature fluid flows and a second flow space 51B through which the high-temperature fluid flows are alternately formed; a flow path 52A formed on the plates 52 for efficient heat transfer; a first inlet 54 and a first outlet 55 configured to allow the low-temperature fluid to flow into and out of the first flow space 51A; a second inlet and a second outlet 56 configured to allow the high-temperature fluid to flow into and out of the second flow space 51B; and a combustion catalyst 58 packed in the second flow space 51B, through which the high-temperature fluid flows, to promote the combustion reaction, whereby heat exchange is enabled by allowing the high-temperature fluid and the low-temperature fluid to flow alternately between the plates.

In other words, the stack cathode off-gas discharged from the fuel cell stack 10 and the fuel off-gas of the second exhaust line 110 branching after passing through the heat exchanger supply the heat required for the combustion reaction through heat transfer to the second flow space 51B in which the combustion catalyst 58 is packed.

In the present disclosure, the low-temperature fluid and the high-temperature fluid may flow in any one of co-flow, counter-flow, and cross-flow configurations.

FIG. 5 is a conceptual diagram illustrating three flow configurations of the high-temperature fluid and the low-temperature fluid in the catalytic combustor according to the present disclosure. In this case, the catalytic combustor may be configured to allow the fresh air supplied to the catalytic combustor, serving as the low-temperature fluid, and the stack cathode off-gas discharged from the fuel cell stack 10 and the fuel off-gas of the second exhaust line 110 branching off after passing through the heat exchanger, serving as the high-temperature fluid, to flow in the above three configurations.

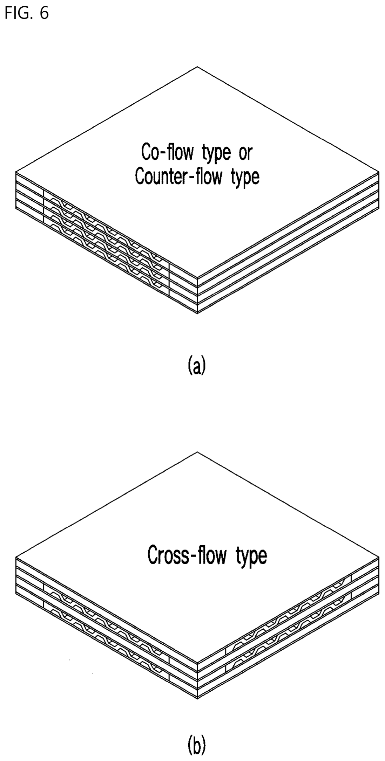

FIG. 6 is a perspective view illustrating embodiments of the three flow configurations of the high-temperature fluid and the low-temperature fluid in the catalytic combustor according to the present disclosure, in which (a) of FIG. 6 illustrates a case where a flow path is formed in one direction (for example, in the front/rear or left/right direction) of a reformer in a co-flow or counter-flow configuration, and (b) of FIG. 6 illustrates a cross-flow configuration.

In this case, depending on the system configuration, it is also possible to form a combination or modification of the respective configurations. In terms of heat exchange efficiency, since the temperature at the outlet of the high-temperature fluid becomes the highest due to the combustion reaction, the counter-flow configuration is the most advantageous.

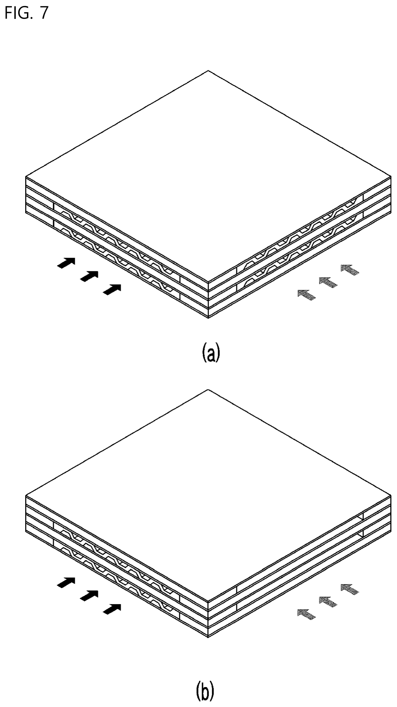

In the meantime, to increase the heat transfer area and simplify the placement of the combustion catalyst 58, a curved structure (metal foam or the like shaped into a wavy form) may be inserted between the plates 52, as shown in FIG. 7.

FIG. 7 is a perspective view illustrating embodiments of the catalytic combustor according to the present disclosure, showing the case of the cross-flow configuration. To increase the heat transfer area, a structure (metal foam or the like shaped into a wavy form) is inserted into the fluid space through which the high-temperature fluid flows, and a metal foam structure containing the combustion catalyst is placed in the space through which the low-temperature fluid (fuel) flows ((a) of FIG. 7). Alternatively, it is possible to pack only the combustion catalyst 58 without the structure ((b) of FIG. 7).

In addition to the effect of increasing the heat transfer area, such a structure can also contribute to securing the structural rigidity of the multi-functional steam methane reformer at high temperatures.

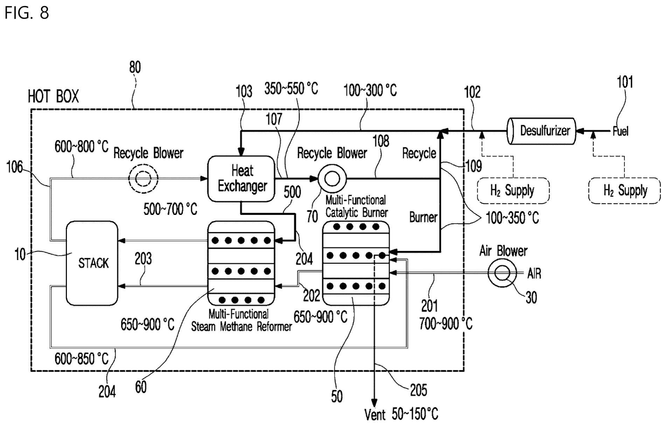

FIG. 8 is a configuration diagram illustrating the temperatures of the fuel and air when passing through each component in the SOFC system according to the present disclosure. In the SOFC system of the present disclosure, the fuel supplied from the fuel supply part 20 flows into the hot box 80 through the fuel inlet line 102 and then into the heat exchanger 40 that utilizes the heat of the stack anode off-gas discharged from the stack.

The temperature of the fuel becomes approximately 100°C to 300°C when the fuel supplied from the fuel supply part 20 flows into the hot box 80 through the fuel inlet line 102, and is then increased to 500°C to 700°C while exchanging heat with the stack anode off-gas in the heat exchanger 40.

Thereafter, the fuel, the temperature of which has been increased in the heat exchanger 40, is provided to the multi-functional steam methane reformer 60.

The fuel reformed through the multi-functional steam methane reformer 60 has an increased temperature ranging from 550°C to 860°C and is then supplied to the fuel cell stack 10. The stack anode off-gas discharged from the fuel cell stack 10 is suctioned by the recycle blower 70, passes through the heat exchanger 40, and exchanges heat with the fresh fuel supplied from the heat exchanger, whereby the temperature thereof drops to a range of 350°C to 550°C.

The recycle blower 70 may be installed on either side of the heat exchanger 40 in the fuel line, and the fuel off-gas passing through the recycle blower 70 branches into two streams, which are respectively provided to the fuel inlet line 102 and the multi-functional catalytic combustor 50.

The fuel off-gas introduced into the fuel inlet line 102 through the first branch line 109 flows back into the heat exchanger 40, while the fuel off-gas introduced into the multi-functional catalytic combustor 50 through the second branch line 110 reacts with the cathode off-gas through the combustion reaction and is then vented. In this case, the large amount of air supplied from the supply part 30 has a temperature increased by the heat exchanger structure of the multi-functional catalytic combustor.

In the meantime, the air supplied from the air supply part 30 flows into the multi-functional catalytic combustor 50 that utilizes the heat of the stack cathode off-gas, has an increased temperature in the multi-functional catalytic combustor 50, and is then provided to the multi-functional steam methane reformer 60 as high-temperature air at 550°C to 900°C.

Thereafter, the high-temperature air is supplied from the multi-functional steam methane reformer 60 to the fuel cell stack 10.

In the stack 10, the stack cathode off-gas discharged after the FC reaction flows into the multi-functional catalytic combustor 50, reacts with the fuel supplied to the multi-functional catalytic combustor through the combustion reaction, and then exhausted.

The SOFC system of the present disclosure maximizes thermal efficiency through a fuel recycling flow using the fuel off-gas. Since the fuel off-gas continuously circulates within the hot box, the thermal efficiency can be maximized.

In addition, the high-temperature steam generated by the FC reaction is continuously supplied to the fuel flow and serves not only as a reactant ($H_2O$) for the reforming reaction in the multi-functional steam methane reformer but also as energy (heat or temperature).

In this respect, the FC system of the present disclosure has a simpler structure than that of other companies because a separate steam generator required for fuel reforming is not necessary.

The amount of heat of a typical fluid can be calculated by Equation (2) as follows.

$$\text{Amount of heat of fluid} = \text{specific heat} \times \text{mass} \times \text{temperature difference} \qquad (2)$$

According to Equation (2), while the amount of heat of a fluid is proportional to the specific heat, mass, and temperature difference of the fluid, the specific heat is an inherent property of the fluid. In addition, when the temperature difference during a process is constant, the amount of heat of the fluid increases as the mass increases. In other words, it can be seen that air exhibiting a high flow rate moves while carrying a large amount of heat in the system. From this perspective, the heat exchange efficiency can be increased by arranging the fuel and air flows in a cross-flow configuration.

**Claims**

1. A fuel recirculation-type solid oxide fuel cell system comprising:

   a fuel cell stack;
   a fuel supply part configured to supply fuel to the fuel cell stack;
   an air supply part configured to supply air to the fuel cell stack;
   a heat exchanger configured to supply the fuel supplied from the fuel supply part to a multi-functional steam methane reformer by increasing a temperature of the fuel through a stack anode off-gas discharged from the fuel cell stack;
   a multi-functional catalytic combustor structured as a heat exchanger, the multi-functional catalytic combustor configured to increase a temperature of the air supplied from the air supply part and supply the air to the multi-functional steam methane reformer by utilizing, as heat sources, a stack cathode off-gas discharged from the fuel cell stack and a fuel off-gas of a second exhaust line branching off after passing through the heat exchanger;
   the multi-functional steam methane reformer configured to receive heat required for a reforming reaction from a large amount of air, the temperature of which has been increased by a combustion reaction in the multi-functional catalytic combustor, and reform the fuel supplied from the heat exchanger into hydrogen, thereby supplying the resulting hydrogen to the fuel cell stack; and
   a recycle blower installed in a fuel line to continuously recirculate the stack anode off-gas discharged from the fuel cell stack.

2. The solid oxide fuel cell system of claim 1, wherein the multi-functional catalytic combustor comprises:

   a plurality of plates stacked such that a first flow space through which a low-temperature fluid flows and a second flow space through which a high-temperature fluid flows are alternately formed;
   a flow path formed on the plates for efficient heat transfer;
   a first inlet and a first outlet configured to allow the low-temperature fluid to flow into and out of the first flow space;
   a second inlet and a second outlet configured to allow the high-temperature fluid to flow into and out of the second flow space; and
   a combustion catalyst packed in the second flow space, through which the high-temperature fluid flows, to promote the combustion reaction,

   whereby heat exchange is performed by allowing the high-temperature fluid and the low-temperature fluid to flow alternately between the plates.

3. The solid oxide fuel cell system of claim 2, wherein the low-temperature fluid is fresh air supplied from the air supply part, and
   the high-temperature fluid comprises the stack cathode off-gas discharged from the fuel cell stack, and the fuel off-gas of the second exhaust line branching off after passing through the heat exchanger.

4. The solid oxide fuel cell system of claim 2, wherein the low-temperature fluid and the high-temperature fluid flow in any one of co-flow, counter-flow, and cross-flow configurations.

5. The solid oxide fuel cell system of claim 2, wherein a curved structure is placed in the first flow space or the second flow space to increase a heat transfer area.

6. The solid oxide fuel cell system of claim 1, wherein the stack anode off-gas is primarily connected to the heat exchanger and branches into two exhaust lines,

   whereby a first exhaust line is provided to a fuel inlet line to supply the stack anode off-gas together with the fuel supplied from the fuel supply part to the stack for fuel recirculation, thereby improving power generation efficiency, and
   the second exhaust line is provided to the multi-functional catalytic combustor to maintain a system temperature.

7. The solid oxide fuel cell system of claim 1, wherein a flow rate of the fuel supplied from the fuel supply part is regulated to adjust an external/internal reforming ratio of the fuel cell stack, thereby controlling a stack temperature.

8. The solid oxide fuel cell system of claim 1, wherein the fuel cell stack, the heat exchanger, the multi-functional catalytic combustor, the multi-functional steam methane reformer, and the recycle blower are installed within a hot box, such that the solid oxide fuel cell system has a structure in which the fuel off-gas continuously circulates within the hot box, thereby maximizing thermal efficiency.

9. The solid oxide fuel cell system of claim 1, wherein a fuel recirculation flow in the fuel line is formed in the following order: the fuel cell stack → the heat exchanger → the recycle blower → the heat exchanger → the multi-functional steam methane reformer → the stack.

10. The solid oxide fuel cell system of claim 1, wherein a flow directed toward the multi-functional catalytic combustor in the fuel line is formed in the following order: the fuel cell stack → the heat exchanger → the recycle blower → the multi-functional catalytic combustor → vent.

11. The solid oxide fuel cell system of claim 1, wherein separate city gas (NG) is directly supplied to a fuel inlet pipe between the multi-functional steam methane reformer and the stack for additional stack temperature control, thereby forcibly performing internal stack reforming to control a stack temperature.

12. The solid oxide fuel cell system of claim 1, wherein the fuel cell stack and balance of plant (BOP) are installed in a modular form, and each module is connected through piping, such that stack replacement is enabled by separating each module during maintenance.

FIG. 1

FIG. 2

**EP 4 708 413 A1**

FIG. 3

11

FIG. 4

HIGH-TEMPERATURE FLUID

LOW-TEMPERATURE FLUID

FIG. 5

(a)

(b)

(c)

FIG. 6

Co-flow type or
Counter-flow type

(a)

Cross-flow type

(b)

FIG. 7

(a)

(b)

FIG. 8

## INTERNATIONAL SEARCH REPORT

International application No.

**PCT/KR2024/005920**

| A. | CLASSIFICATION OF SUBJECT MATTER |
|---|---|

**H01M 8/0612**(2016.01)i; **H01M 8/04089**(2016.01)i; **H01M 8/04014**(2016.01)i; **H01M 8/0662**(2016.01)i;
**H01M 8/04701**(2016.01)i; **H01M 8/04746**(2016.01)i; **H01M 8/2475**(2016.01)i; **H01M 8/12**(2006.01)i

According to International Patent Classification (IPC) or to both national classification and IPC

| B. | FIELDS SEARCHED |
|---|---|

Minimum documentation searched (classification system followed by classification symbols)

H01M 8/0612(2016.01); H01M 8/04(2006.01); H01M 8/04014(2016.01); H01M 8/04089(2016.01); H01M 8/04228(2016.01);
H01M 8/04303(2016.01); H01M 8/06(2006.01); H01M 8/12(2006.01); H01M 8/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체산화물 연료전지 시스템(solid oxide fuel cell system), 열교환기 구조(heat
exchanger structure), 촉매연소기(catalytic combustor), 다기능 스팀 개질기(multifunctional steam reformer), 핫박스(hot box)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0029213 A (CUMMINS ENTERPRISE LLC) 15 March 2021 (2021-03-15)<br>See paragraphs [0014]-[0015], [0020]-[0021], [0030]-[0032], [0040] and [0062]; and figures 1-2. | 1,6-12 |
| A | | 2-5 |
| Y | KR 10-2012-0035449 A (KOREA INSTITUTE OF MACHINERY & MATERIALS) 16 April 2012 (2012-04-16)<br>See paragraphs [0035] and [0046]-[0047]; and figure 2. | 1,6-12 |
| A | JP 2016-095940 A (MITSUBISHI HITACHI POWER SYSTEMS LTD.) 26 May 2016 (2016-05-26)<br>See entire document. | 1-12 |
| A | KR 10-1339132 B1 (STX HEAVY INDUSTRIES CO., LTD. et al.) 09 December 2013 (2013-12-09)<br>See entire document. | 1-12 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 August 2024** | **07 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/005920** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-0829089 B1 (GS CALTEX CORPORATION) 19 May 2008 (2008-05-19)<br>     See entire document. | 1-12 |

Form PCT/ISA/210 (second sheet) (July 2022)

## INTERNATIONAL SEARCH REPORT
### Information on patent family members

International application No.

**PCT/KR2024/005920**

| Patent document cited in search report | | | Publication date (day/month/year) | Patent family member(s) | | | Publication date (day/month/year) |
|---|---|---|---|---|---|---|---|
| KR | 10-2021-0029213 | A | 15 March 2021 | CN | 113016097 | A | 22 June 2021 |
| | | | | EP | 3821491 | A1 | 19 May 2021 |
| | | | | EP | 3821491 | A4 | 13 July 2022 |
| | | | | JP | 2021-531622 | A | 18 November 2021 |
| | | | | JP | 7191193 | B2 | 16 December 2022 |
| | | | | KR | 10-2507658 | B1 | 07 March 2023 |
| | | | | US | 10991963 | B2 | 27 April 2021 |
| | | | | US | 2020-0020965 | A1 | 16 January 2020 |
| | | | | WO | 2020-014121 | A1 | 16 January 2020 |
| KR | 10-2012-0035449 | A | 16 April 2012 | KR | 10-1165745 | B1 | 18 July 2012 |
| JP | 2016-095940 | A | 26 May 2016 | JP | 6494981 | B2 | 03 April 2019 |
| KR | 10-1339132 | B1 | 09 December 2013 | KR | 10-2013-0109339 | A | 08 October 2013 |
| KR | 10-0829089 | B1 | 19 May 2008 | | None | | |

Form PCT/ISA/210 (patent family annex) (July 2022)

**EP 4 708 413 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102490704